# FASCICULE DE BREVET EUROPEEN

(11) **EP 1 725 877 B1**
(45) Date de publication et mention de la délivrance du brevet: **05.12.2018**
(21) Numéro de dépôt: 05736557.9
(22) Date de dépôt: 11.03.2005
(51) Int. Cl.: G01N 35/04, B01F 11/00

(54) **DISPOSITIF POUR L'APPROVISIONNEMENT D'ANALYSEURS SUR SANG TOTAL**
VORRICHTUNG ZUR ZUFÜHRUNG VON BLUTRÖHRCHEN AN EIN VOLLBLUTANALYSEGERÄT
DEVICE FOR SUPPLYING BLOOD TUBES TO A WHOLE BLOOD ANALYSER

(30) Priorité: 16.03.2004 FR 0402687
(43) Date de publication de la demande: 29.11.2006
(73) Titulaire: HORIBA ABX SAS, 34090 Montpellier (FR)
(72) Inventeur: LE COMTE, Roger, F-34270 Perols (FR); DUPOTEAU, François, F-75018 Paris (FR)
(74) Mandataire: Plaçais, Jean Yves
(86) Numéro de dépôt international: PCT/FR2005/000595
(87) Numéro de publication internationale: WO 2005/101025

(56) Documents cités:
- EP-A- 0 275 119
- EP-A- 0 295 048
- WO-A-95/03548
- US-A- 4 609 017
- US-A- 4 797 258
- US-A- 5 380 488
- US-A1- 2002 021 983
- US-A1- 2004 022 682
- US-B1- 6 689 318

## Description

L'invention concerne un dispositif pour l'approvisionnement en tubes de sang d'analyseurs sur sang total.

Les analyseurs sur sang total sont des analyseurs qui effectuent des analyses sur des tubes de sang comportant la totalité des éléments du sang en opposition aux analyseurs opérant sur le plasma ou le sérum sanguin.

A la différence des analyses effectuées sur le plasma ou le sérum sanguin, le sang destiné à être analysé par un analyseur sur sang total doit être soigneusement mélangé dans un délai très court avant l'analyse. Cette phase d'agitation est strictement nécessaire afin d'homogénéiser le sang pour remettre en suspension les cellules qui sédimentent naturellement lorsque le tube est immobile, et elle doit être réalisée selon les recommandations des comités de normalisation.

Cette phase d'agitation est traitée différemment selon le type d'analyseur employé et le degré d'automatisation de celui-ci. Dans le cas des analyseurs les plus simples, les moyens d'agitation sont absents de l'appareil et cette agitation est alors effectuée manuellement par l'opérateur préalablement à l'analyse.

Dans les analyseurs plus sophistiqués et notamment pour les appareils d'hématologie, les tubes sont installés avant analyse dans des agitateurs composés de roues ou de rateliers (ou "racks").

Dans les agitateurs munis de roues, les tubes de sang sont introduits dans des empreintes disposées à la périphérie d'une roue. Chaque tube est ainsi renversé puis remis à sa position initiale à chaque tour de roue. La qualité de l'agitation est bonne, mais l'automatisme est limité à la capacité de la roue qu'il faut changer à chaque fois que cette capacité est atteinte.

Dans les agitateurs munis de rateliers les tubes sont disposés dans des rateliers avant d'être chargés dans un analyseur. L'analyseur prend ensuite en charge l'agitation des tubes puis l'analyse et le stockage des rateliers analysés.

Pour accroître le rendement et l'efficacité des analyses il est courant d'adjoindre aux analyseurs des chaînes automatiques de convoyage pour transporter des tubes à analyser depuis une zone de stockage jusqu'au point d'analyse où ils sont pris en charge par l'analyseur.

La majorité des chaînes automatisées mettent en oeuvre un principe de convoyage en ratelier, avec des passeurs fonctionnant également avec des rateliers. Cette technique est particulièrement utilisée par la société Sysmex, qui commercialise un système où les rateliers sont disposés sur un rail qui les convoie d'un analyseur à l'autre, le passage sur un analyseur s'effectuant suivant un mouvement de translation. Le stockage et la gestion du flux des rateliers sont réalisés par un système de stockage tampon. Une description de cette technique peut être trouvée dans le brevet US 5 232 081. Le stockage et la gestion du flux de rateliers sont assurés par un dispositif de stockage qui permet d'adapter le passage d'un ratelier du système de stockage sur le convoyeur à la cadence d'analyse. Les rateliers s'avèrent efficaces pour les analyses ne nécessitant pas un nouveau passage dans l'analyseur car ils permettent d'avoir des cadences d'analyse importantes. Cependant ce système manque de flexibilité lorsque, pour une raison quelconque, il devient nécessaire qu'un tube repasse dans l'analyseur. Dans ce cas, c'est tout le ratelier qui contient le tube incriminé qui doit retourner dans le dispositif de stockage pour repasser dans l'analyseur.

L'utilisation de rateliers sur une chaîne automatisée nécessite également des aménagements contraignants en ce qui concerne les changements de direction et les virages disposés sur la chaîne de convoyage. Des exemples de solutions visant à résoudre ces difficultés sont notamment décrits dans les brevets US 5 366 062 et US 5 380 488.

Un autre problème concerne la lecture des informations inscrites sur l'étiquette de chacun des tubes, par le fait que la chaîne automatisée doit pouvoir disposer de lecteurs permettant de lire les étiquettes de chaque tube à travers le ratelier. Plusieurs solutions techniques ont été proposées pour résoudre ce problème. Ainsi, par exemple, les brevets US 6 081 326 et US 5 286 959 décrivent un dispositif permettant de faire tourner le tube sur lui même à l'intérieur du ratelier pour placer son étiquette devant un lecteur optique positionné devant une fente du ratelier. Selon un autre mode de réalisation décrit dans la demande de brevet US 2002/0100806, un ergot situé dans l'empreinte contenant le tube permet de positionner l'étiquette du tube devant une fenêtre du ratelier pour permettre à un lecteur optique de lire le contenu de l'étiquette. Ces brevets montrent bien la complexité et la difficulté qu'il y a de lire une étiquette d'un tube stocké dans un râtelier.

Aussi l'utilisation de rateliers dans une chaîne automatisée montre ses limites dès lors qu'il est nécessaire de manipuler ou de sélectionner un tube spécifique pour lui associer une nouvelle série de tests. Le diagnostic et les nouvelles techniques de mesure montrent qu'un tube doit pouvoir être re-testé ou subir une nouvelle série de tests suite à une première analyse litigieuse. Dans ce contexte, la chaîne automatisée utilisant des râteliers, perd de son intérêt et l'utilisation de chaîne automatisée à support mono-tube apparaît mieux adaptée aux besoins des laboratoires modernes.

Les chaînes automatisées à support mono-tube sont dans la plupart des cas des chaînes comportant des tapis roulants. On retrouve des descriptions de ce type de chaîne dans les brevets US 6 374 989 et US 5 9413 66. Dans le brevet US 5 224 585, le tapis roulant est utilisé comme support magnétique permettant aux supports de rester collés au tapis aussi bien lors de déplacements horizontaux que verticaux.

Dans le domaine des chaînes automatisées, et notamment pour les appareils de biochimie, des techniques de chaînage sont également utilisées. Mais les temps de réaction de ces appareils sont assez importants. Un système complexe de chaînage qui associe un support de tube à un réceptacle solidaire de la chaîne et permettant de réaliser une réaction chimique est notamment décrit dans le brevet US 6 358 471. Un autre système de chaînage permettant de convoyer des tubes pour les acheminer à destination d'un appareil d'analyse sur sang total est décrit dans le brevet US 4 944 924. Le brevet US 5 582 795 décrit également un chaînage de tube associant les tubes à une courroie.

Ces techniques de chaînage sont difficilement applicables à des chaînes automatisées, notamment par ce qu'elles ne permettent pas de désolidariser un tube, ou un tube avec son support, sans engendrer des problèmes dans le flux des tubes. De même le repassage d'un tube sur un des appareils nécessite le défilement de l'ensemble du chaînage devant l' appareil à utiliser. Le chaînage décrit dans les brevets précités apparaît comme une solution technique peu flexible et en aucun cas adaptée à des chaînes automatisées modernes fonctionnant en sang total.

D'autres brevets ou demandes de brevet, tels que US 5 623 415, US 4 039 288, US 5 623 415, WO 95/03548 et WO98/01760, décrivent des mises en oeuvre d'appareils d'analyse comportant des rails mono-tube mais il apparaît que ceux ci sont uniquement destinés au convoyage des tubes et ne font apparaître aucun moyen pré-analytique permettant par exemple l'agitation des tubes avant analyse.

US 2002/0021983 A1 décrit un analyseur pour sang total avec un dispositif de transfert et des moyens d'agitation. Les tubes d'échantillons sont transportés dans des cassettes et non individuellement.

La catégorie des chaînes unitaires offre principalement l'avantage de pouvoir traiter chaque tube comme une entité différente de celle des autres tubes. Pour cela, elle requiert que soit mise à sa disposition ses propres besoins d'analyse, de vérification et d'examen complémentaire notamment la possibilité d'exploiter facilement "l'analyse conditionnée" ou "reflex testing" qui consiste à effectuer automatiquement un examen complémentaire lorsque celui-ci peut aider logiquement au diagnostic. Ceci est une source d'efficacité dans l'aide au diagnostic et la réduction des coûts en évitant tout examen complémentaire inutile au diagnostic.

L'invention vise à introduire dans les chaînes automatisées mono tube des moyens pré-analytiques dédiés à des tubes sur sang total, permettant à chaque analyseur sur sang total installé sur une chaîne automatique en mode unitaire d'être raccordé aussi simplement qu'un analyseur fonctionnant à partir de sérum ou de plasma sanguin.

Elle vise notamment à déporter le traitement et les actions réalisées sur l'échantillon avant son passage dans un analyseur sur sang total vers le module pré-analytique pour le transférer dans un tube prêt à être analysé à un analyseur sur sang total.

Dans cet aspect de l'invention, l'analyseur sur sang total se comporte comme un terminal analytique dont la fonction se limite à la réalisation de l'analyse elle-même au même titre qu'un analyseur fonctionnant sur plasma ou sang total dont le mode de fonctionnement est également le mode unitaire.

Selon encore un autre aspect de l'invention, le module pré-analytique est prévu pour répondre à des demandes venant de l'ensemble des analyseurs sur sang total connectés à la chaîne automatisée.

De façon avantageuse le dispositif de l'invention comprend un module pré-analytique disposé sur une chaîne de transfert mono-tube entre une zone de stockage de tubes à analyser et au moins un analyseur sur sang total fonctionnant en mode unitaire, ce qui permet de rassembler et d'optimiser les actions et fonctions nécessaires à la préparation des tubes de sang total avant leur passage dans l'analyseur.

Auparavant ces fonctions et ces actions étaient réalisées par l'analyseur sang total ou de façon manuelle. Le module pré-analytique permet de gérer ces actions et ces fonctions de façon logique et coordonnées avec les analyseurs présents sur la chaîne automatisée.

Le module pré-analytique offre une plus grande flexibilité au processus d'analyse en fournissant des tubes agités à l'analyseur sur sang total, mais il peut aussi fournir un tube de contrôle qualité pour un autre analyseur en un temps très court.

Le module pré-analytique a également pour vocation de rendre des opérations, autrefois manuelles, complètement automatiques en les conformant de façon certaine avec la normalisation en vigueur dans les laboratoires.

Selon une première variante de réalisation, le module pré-analytique comprend un dispositif d'aération et de reconnaissance des tubes, un agitateur de tubes pour homogénéiser le sang avant une analyse, ainsi que des moyens de chargement et de déchargement automatique des tubes disposés respectivement entre la chaîne de transfert et le dispositif d'aération et de reconnaissance des tubes et l'agitateur de tube.

Selon une deuxième variante de réalisation, le module pré-analytique comprend un compartiment de conservation et de mise à disposition de tubes de contrôle de qualité pour des analyseurs nécessitant d'être contrôlés, ainsi qu'un agitateur de tubes pour homogénéiser le sang dans les tubes de contrôle et dans les tubes à analyser, ainsi que des moyens de chargement et de déchargement automatique des tubes disposés respectivement entre la chaîne de transfert et d'une part, le compartiment de conservation et de mise à disposition de tubes de contrôle de qualité et d'autre part, l'agitateur de tubes.

Suivant une troisième variante ressemblant aux deux premières, il est adjoint à l'agitateur de tubes un compartiment destiné à la mise à disposition de l'analyseur des tubes de contrôle qualité et un dispositif d'aération et de reconnaissance des tubes ainsi que des moyens de chargement et de déchargement automatique des tubes disposés respectivement entre la chaîne de transfert et le compartiment de conservation et de mise à disposition de tubes de contrôle de qualité, le dispositif d'aération et de reconnaissance des tubes et l'agitateur de tubes.

Dans un mode de réalisation préférentiel, le dispositif d'aération et de reconnaissance des tubes comprend un dispositif de perçage des tubes permettant d'effectuer leur aération et un dispositif de lecture permettant de reconnaître les informations de marquage des tubes.

Le compartiment destiné à la mise à disposition de l'analyseur des tubes de contrôle qualité comporte une enceinte isolante dont l'intérieur est maintenu à température constante par un module de régulation et un dispositif de commutation permettant de transférer des paramètres de régulation via un module d'interface réseau pour permettre à un module de commande et d'asservissement de recevoir des instructions d'un centre de télémaintenance ou d'un réseau informatique de type Internet ou Intranet.

Selon un mode de réalisation préférentiel le module de régulation est un module de régulation à effet de type connu à effet Peltier.

Selon encore une autre caractéristique avantageuse, la chaîne de transfert est repliée sur elle même de façon à former une voie montante et une voie descendante et est couplée à un échangeur/chargeur de tube disposé entre le module pré-analytique et l'analyseur ce qui permet aux tubes soit d'être transférés d'une voie sur l'autre voie soit de dépasser le tube qui les précède sur la même voie.

Dans ce mode de réalisation le dispositif échangeur/chargeur de tubes sépare chacune des deux voies en deux tronçons et se compose d'un tiroir divisé en quatre compartiments, ledit tiroir étant mobile en translation suivant une direction perpendiculaire à l'axe longitudinal du rail de convoyage. De cette façon, le transfert d'un tube d'une voie sur l'autre peut avoir lieu en positionnant le compartiment qui le contient entre les deux tronçons de l'autre voie.

Le passage d'un tube devant un autre disposé sur la même voie est obtenu en positionnant le compartiment contenant le tube à dépasser à l'extérieur de sa voie ce qui permet au tube qui le suit sur la même voie d'occuper dans un premier temps le compartiment adjacent avant de continuer dans un deuxième temps sa progression sur la même voie.

Pour permettre un chargement/déchargement automatique des tubes entre la chaîne de convoyage et le module pré-analytique la chaîne de convoyage est sectionnée en tronçons formés de tapis roulants, séparés entre eux par des dispositifs de chargement/déchargement en forme de tiroir divisé en compartiments limités par deux cloisons orientées parallèlement à la direction longitudinale XX' du rail de convoyage et calibrés pour recevoir chacun un tube et son support.

Dans une forme de réalisation préférentielle, les dispositifs de chargement/déchargement en forme de tiroir sont divisés en trois compartiments, un compartiment d'extrémité permettant le chargement et le déchargement des tubes dans le module pré-analytique et deux compartiments dédiés au transfert des tubes respectivement entre les deux tronçons adjacents de la voie montante et de la voie descendante.

De façon à optimiser la cadence de fonctionnement de l'agitateur et satisfaire aux conditions émises par la NCCLS à l'usage dans les laboratoires, celui ci comporte une roue munie d'un nombre déterminé d'empreintes pouvant recevoir chacune un tube, chaque tube à agiter étant chargé dans une empreinte par l'intermédiaire d'un dispositif de chargement.

Enfin pour permettre un chargement automatique des tubes de la zone de stockage sur la chaîne de transfert, la zone de stockage comprend un bras manipulateur qui associe sur un convoyeur chaque tube à un support. Les tubes avec leur support étant ensuite acheminés par le convoyeur sur la chaîne de convoyage.

Il est avantageux que le module pré-analytique comprenne, en plus de l'agitateur de tube, un détecteur pour détecter le niveau d'un liquide contenu dans un tube.

Le module pré-analytique peut aussi comprendre, en plus de l'agitateur de tube, un organe de chauffage pour chauffer les tubes sur l'agitateur de tube par effet Peltier.

Le compartiment de conservation mentionné plus haut peut aussi conenir des tubes destinés à l'analyse. Le module pré-analytique peut aussi comprendre plusieurs compartiments de conservation destinés à des tubes de contrôle qualité ou à des tubes destinés à des analyses.

Selon encore une autre caractéristique de l'invention, le module pré-analytique comprend un détecteur pour détecter la présence de caillots dans des tubes de sang. Ce détecteur comprend de préférence des moyens optiques ou des ondes sonores ou des moyens électriques.

Dans la description qui suit, faite seulement à titre d'exemple on se réfère aux dessins annexés, sur lesquels:
- la Figure 1 est une vue de dessus d'un mode de réalisation d'un dispositif selon l'invention permettant une alimentation automatique en tubes de sang d'un analyseur mono-tube sur sang total;
- la Figure 2 représente une partie du dispositif de la figure 1, à échelle agrandie;
- la Figure 3 est une vue de face correspondant à la figure 2;
- la Figure 4 est une vue en perspective d'un bras robotisé permettant la préhension des tubes entre la zone de stockage et la chaîne de transfert équipant le dispositif représenté aux figures 1 et 2;
- la Figure 5 est une vue montrant un exemple de réalisation d'une pièce support de tube équipant la chaîne de transfert des figures 1 à 3;
- la Figure 6 est un mode de réalisation du compartiment de conservation équipant le dispositif des figures 1 à 3;
- les Figures 7 et 8 sont deux vues montrant deux variantes de réalisation d'un dispositif selon l'invention;
- la Figure 9 est un organigramme illustrant un mode de fonctionnement d'un dispositif selon l'invention;
- les Figure 10 et 11 sont une vue de dessus et une vue de face d'un détecteur de niveau de liquide;
- la Figure 12 est une vue de face d'un agitateur de tube équipé d'un organe de chauffage à effet Peltier;
- la Figure 13 est unevue de dessus d'un compartiment de conservation, analogue à celui de la figure 6, destiné à des tubes de contrôle qualité ou à des tubes destinés aux analyses; et
- les Figures 14 et 15 sont une vue de dessus et une vue de face d'un détecteur destiné à identifier la présence de caillots à l'intérieur d'un tube.

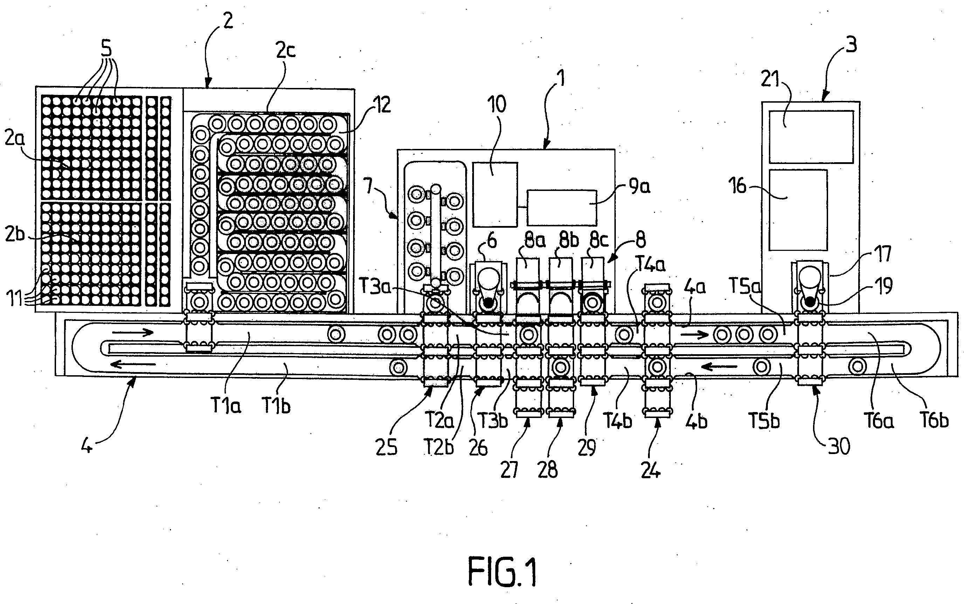

On se réfère d'abord aux Figures 1 à 3 où les éléments homologues portent les mêmes références et qui montrent une première variante de réalisation d'un dispositif selon l'invention. Ce dispositif comprend un module pré-analytique 1 disposé entre une zone de stockage 2 de tubes de sang à analyser et au moins un analyseur mono tube 3. Une chaîne de convoyage mono tube 4, réalisée sous la forme d'un rail, assure le transport de tubes 5 depuis la zone de stockage 2 à destination, soit du module pré-analytique 1, soit d'un ou plusieurs analyseurs mono tube 3. Par l'expression "mono tube", on entend signifier que l'opération concernée (convoyage, analyse, etc.) est effectuée sur un tube individuel et non pas sur une pluralité de tubes.

Le module pré-analytique 1 est destiné à accomplir un certain nombre d'opérations préalables à une analyse ultérieure. Il se compose d'un dispositif 6 d'aération et de reconnaissance des tubes 5, d'un compartiment 7 permettant la conservation et la mise à disposition de tubes de contrôle qualité, et d'un agitateur 8 permettant, dans l'exemple représenté, d'agiter simultanément des tubes à l'aide de trois roues 8a,8b,8c montées en rotation autour d'un axe horizontal. Le compartiment de conservation 7 peut également contenir des tubes 5 destinés à l'analyse.

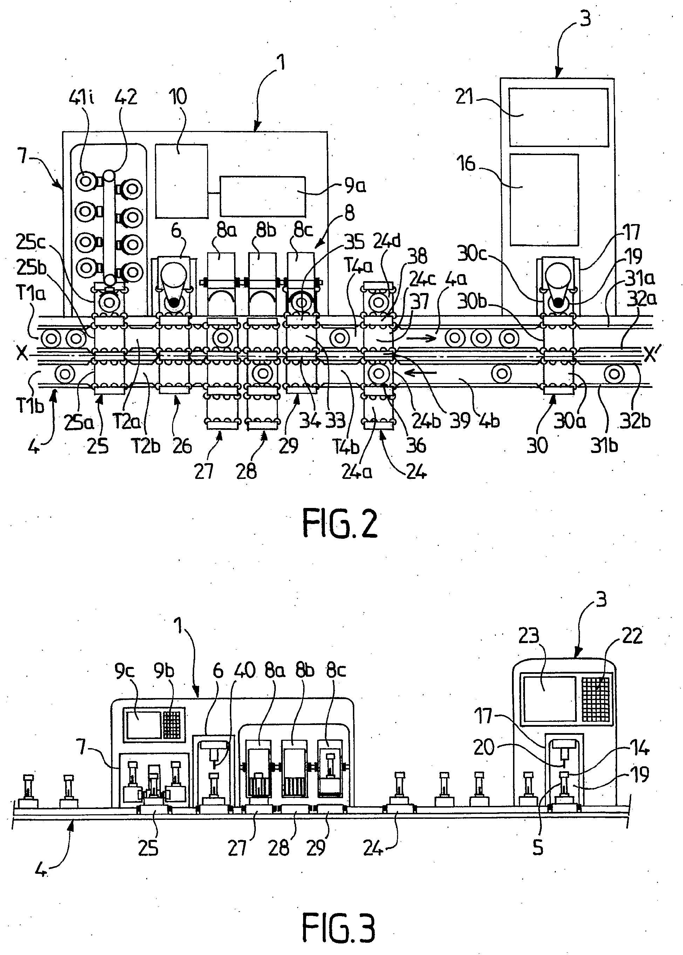

Le module pré-analytique 1 comprend également un module de commande et d'asservissement 9a (figures 1 et 2) couplé à un clavier 9b et à un écran de visualisation 9c (figure 3). Ceux-ci permettent d'assurer le contrôle et le fonctionnement des éléments composant le module pré-analytique 1. Le module de commande et d'asservissement 9a est d'autre part couplé à un module d'interface réseau 10 permettant au module de commande et d'asservissement 9a de recevoir des instructions d'un centre de télémaintenance (non représenté) via un réseau informatique de type Internet ou Intranet, par exemple.

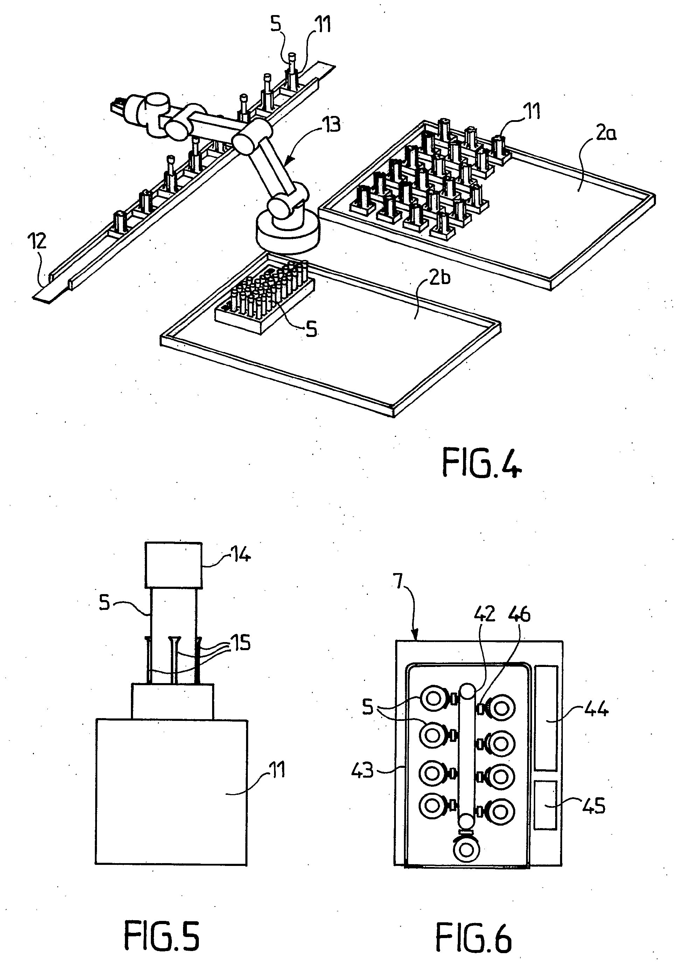

La zone de stockage 2 (figure 1) comporte une zone 2a de stockage de tubes 5 à analyser, une zone 2b de stockage de supports 11 de tube 5 et une zone d'assemblage 2c destinée à l'assemblage des tubes 5 à analyser sur leurs supports 11 et permettre l'acheminement des tubes à analyser avec leurs supports sur un convoyeur 12 replié en zigzag à destination du rail de convoyage 4. L'assemblage des tubes 5 avec leurs supports 11 est effectué de la façon représentée à la Figure 4, à l'aide d'un bras manipulateur robotisé 13 qui associe sur le convoyeur 12 dans la zone d'assemblage 2c un tube 5 à analyser présent dans la zone de stockage 2a des tubes à un support 11 de la zone de stockage 2b des supports.

Comme le montre la figure 5, les tubes 5 sont munis de bouchons individuels 14 et sont introduits verticalement à l'intérieur d'un support 11 où ils sont maintenus par des lames de ressort 15.

L'analyseur 3 comporte de façon connue un dispositif d'analyse du sang 16 couplé à un moyen de prélèvement 17 comportant une empreinte 19 pour maintenir chaque tube 5 à analyser à l'aplomb d'une aiguille de prélèvement 20. L'analyseur 3 comporte également des moyens de commande 21 du dispositif d'analyse couplés à un clavier 22 et à un écran de contrôle 23.

De façon avantageuse la chaîne de convoyage mono tube 4 est repliée sur elle même pour former deux voies parallèles 4a, 4b se déplaçant à contre sens l'une de l'autre et comporte un dispositif échangeur/chargeur de tube 24 disposé au travers des deux voies 4a et 4b afin de permettre des transferts de tubes entre les deux voies ou de permettre à un tube d'une voie de passer devant le tube qui le précède sur la même voie.

La première voie 4a, dénommée ci-après voie montante, assure un déplacement des tubes 5 depuis la zone de stockage 2c en direction de l'analyseur 3 et la deuxième voie 4b, ou voie descendante, assure un déplacement en sens inverse entre l'analyseur et la zone de stockage 2.

Pour permettre le chargement sur le rail de convoyage des tubes montés sur leur support ou leur déchargement dans les différents modules composant le module pré-analytique 1 et dans l'analyseur 3, la chaîne de convoyage 4 est sectionnée en tronçons référencés de T1a à T6a sur la première voie 4a et de T1b à T6b sur la deuxième voie 4b, séparés entre eux par des dispositifs de chargement/déchargement référencés de 25 à 30 en forme de tiroirs divisés en compartiment 25a, 25b, 25c;...;30a, 30b, 30c.

Chaque tronçon 25a, 25b, 25c;...;30a, 30b, 30c de la chaîne de convoyage 4 se présente sous la forme d'un tapis roulant se déplaçant entre deux parois latérales respectivement31a, 32a;31b,32b. Les compartiments 25a, 25b, 25c;...; 30a, 30b, 30c de chacun des dispositifs de chargement/déchargement, sont alignés suivant une direction perpendiculaire à l'axe longitudinal XX' du rail de convoyage 4 et sont calibrées pour recevoir chacun un tube 5 et son support 11 provenant du tronçon de rail qui leur est adjacent.

Pour permettre l'engagement d'un tube 5 avec son support 11 dans un compartiment, chaque compartiment comporte un fond 33 situé dans le même plan que celui des deux tapis roulants appartenant aux deux tronçons de rail qui lui sont adjacents et qui est limité par deux cloisons 34, 35 perpendiculaires audit fond 33 et alignées respectivement avec les parois latérales 31 et 32 délimitant les tapis roulant des tronçons T1a à T6a et T1b à T6b de la chaîne de convoyage 4. Le déplacement des support de tubes 11 dans les compartiments est assuré par des rouleaux d'entraînement 36 en contact avec les supports de tube 11.

Le dispositif échangeur/chargeur de tubes 24 se présente également sous la forme d'un tiroir mobile en translation suivant une direction perpendiculaire à l'axe longitudinal XX' du rail de convoyage 4. Il est composé, à la différence des dispositifs de chargement/déchargement, de quatre compartiments 24a, 24b, 24c, 24d comportant, de façon similaire à ceux du dispositif de chargement/déchargement, un fond 37 limité par deux cloisons 38, 39 perpendiculaires au fond 37 et s'étendant dans la direction de l'axe longitudinal XX' de la chaîne de convoyage 4. Le transfert d'un tube 5 d'une voie sur l'autre s'effectue en déplaçant le dispositif échangeur/chargeur de tube 24 dans la direction perpendiculaire à l'axe longitudinal XX'du rail de convoyage 4 en alignant les cloisons du compartiment contenant le tube d'une voie à transférer respectivement avec les parois latérales 31 et 32 de l'autre voie. Cette manoeuvre qui a lieu sous la commande du dispositif de contrôle et d'asservissement 9 permet d'inverser le sens de déplacement d'un tube 5 et de son support 11 sur le rail de convoyage 4. Mais il est aussi possible de déporter un tube 5 et son support 11 à l'extérieur de la voie sur laquelle ils se déplacent en introduisant le tube 5 et son support 11 dans un compartiment respectivement 24a, 24d situé à une extrémité du tiroir pour permettre au tube et son support qui le suivent sur la même voie de venir occuper le compartiment adjacent respectivement 24b, 24c pour les dépasser sur la même voie.

Le dispositif d'aération et de reconnaissance de tubes 6, et le compartiment 7 sont alimentés en tubes par la chaîne de convoyage mono-tube 4 à l'aide des dispositifs de chargement/déchargement 25 et 26.

Le dispositif de chargement/déchargement 26 permet, soit le transfert en continu des tubes sur chacune des voies 4a, 4b, sans passer par le dispositif d'aération et de reconnaissance des tubes 6, soit la préhension d'un tube 5 de la voie 4a pour le transférer dans le dispositif d'aération et de reconnaissance de tube 6, suivant une position permettant son perçage par un dispositif de perçage 40 (figure 3) permettant d'effectuer son aération et de reconnaître son marquage par la lecture par un lecteur approprié non représenté, des informations qui le caractérisent inscrites sur une étiquette attachée au tube 5. Ces informations renseignent notamment l'analyseur sur le type d'analyse et le type d'action qu'il doit effectuer sur le contenu de chaque tube. Une fois le tube aéré et identifié, celui ci est ramené sur le rail de convoyage 4 pour être dirigé soit vers l'agitateur 8 soit directement vers l'analyseur 3.

Le compartiment 7, qui est destiné à la conservation des sangs de contrôle et à leur gestion, renferme un nombre déterminé d'emplacements de tube 41i (figure 2) disposés sur une courroie 42 permettant d'alimenter le rail de convoyage 4 par l'intermédiaire du dispositif de chargement/déchargement 25 pour permettre, soit le transfert continu des tubes sur chacune des voies 4a, 4b, soit la préhension d'un tube de la courroie 42 pour le transférer sur la voie 4a du rail de convoyage ou inversement pour effectuer la préhension d'un tube d'une des voies 4a, 4b du rail de convoyage pour le transférer dans un emplacement libre 4i de la courroie 42.

Dans le mode de réalisation de la Figure 6, le compartiment 7 comporte une enceinte isolante 43 dont l'intérieur est maintenu à température constante par un module de régulation 44 de type connu à effet Peltier par exemple. Il comporte également un dispositif de commutation 45 permettant de transférer les paramètres de régulation vers le module d'interface réseau 10 des Figures 1 et 2. Les tubes 5 sont maintenus sur la courroie 42 par des moyens de fixation 46 de type mécanique ou magnétique, commandés par le dispositif de contrôle et d'asservissement 9.

Dans la configuration des Figures 1 à 3, l'agitateur 8 permet d'agiter simultanément trois tubes grâce aux empreintes de trois roues 8a, 8b, 8c alimentées respectivement par trois dispositifs de chargement /déchargement 27, 28, 29. Toutefois, ce nombre peut être aussi bien diminué que augmenté en fonction d'une part, de la capacité du ou des analyseurs à servir et d'autre part, en tenant compte du temps minimum d'agitation des tubes nécessaire à une bonne remise en suspension des cellules du sang à analyser dans chaque tube.

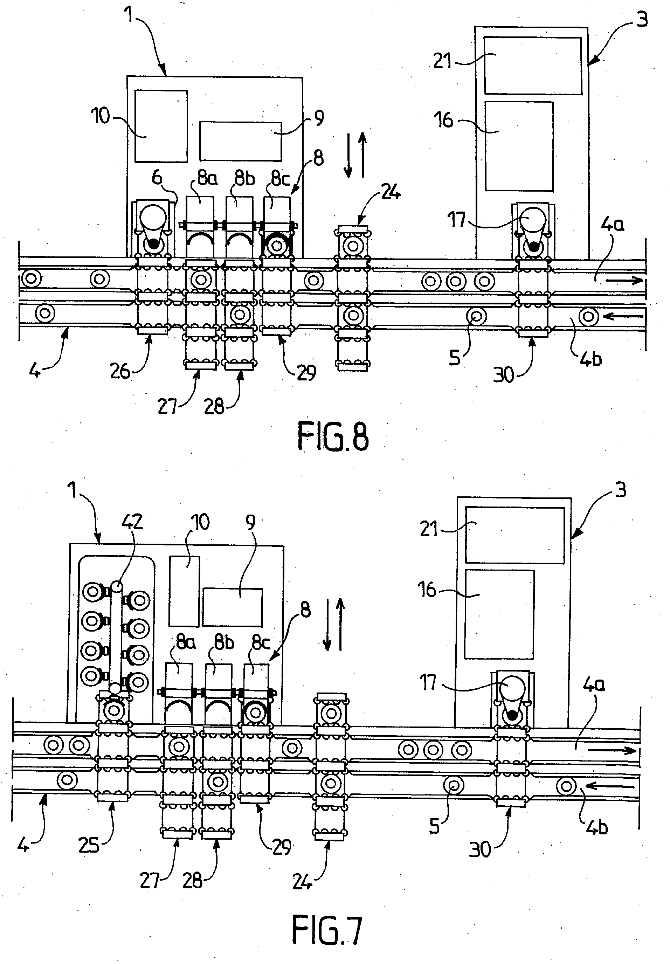

Les exemples de mise en oeuvre du dispositif selon l'invention, représentés aux Figures 7 et 8, illustrent des versions dégradées du mode de réalisation des Figures 1 à 3. Dans la deuxième variante de réalisation du dispositif représenté à la Figure 7 où les éléments homologues à ceux des Figures 1 à 3 portent les mêmes références, le module pré-analytique 1 comporte les mêmes éléments que ceux des Figures 1 à 3, privés cependant du dispositif 6 d'aération et de reconnaissance des tubes. Ce système dégradé est plus particulièrement adapté pour effectuer les opérations de contrôle sur les analyseurs.

Suivant la troisième variante de mise en oeuvre de l'invention représentée à la Figure 8, où les éléments homologues à ceux des Figures 1 et 2 portent les mêmes références, le module pré-analytique est formé uniquement d'un dispositif 6 d'aération et de reconnaissance des tubes et d'un module 8 d'agitation des tubes pour homogénéiser le sang et éviter la formation de caillots.

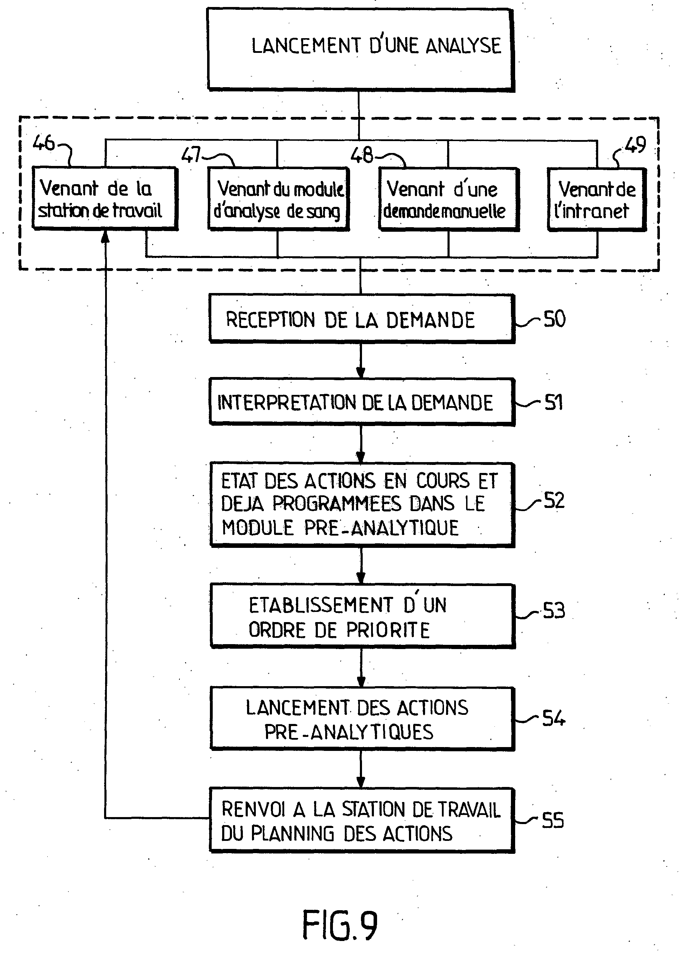

La figure 9 décrit un mode de fonctionnement du module pré-analytique 1 à partir d'une demande d'analyse pouvant provenir de quatre utilisateurs différents. Dans l'exemple représenté la demande peut provenir d'une station de travail 46, d'un module d'analyse sur sang total 47 présent ou connecté à la chaîne automatisée 4, d'une demande manuelle 48 adressée par un opérateur utilisant l'interface du module pré-analytique 1 souhaitant engager par exemple une action de maintenance et enfin d'une demande 49 provenant du réseau via l'intranet ou internet d'un centre de télémaintenance initialisant par exemple, le lancement d'un contrôle qualité.

Lorsqu'une demande est reçue à l'étape 50 par le module pré-analytique 1, elle est interprétée à l'étape 51 pour vérifier la validité de la demande. Ensuite à l'étape 52 un état des lieux des actions programmées et en cours est réalisé pour vérifier que le module pré-analytique 1 à bien les capacités pour traiter la nouvelle demande dans un intervalle de temps déterminé. Une fois l'analyse terminée et si les conditions d'acceptation de la nouvelle demande sont réalisées le module pré-analytique intègre à l'étape 53 la nouvelle demande dans son planning en fonction de ses priorités. Puis le module pré-analytique continue l'exécution des demandes en tenant compte de son nouveau planning mis à jour par l'acceptation de la nouvelle demande pour le lancement des actions pré-analytiques à l'étape 54. Ensuite le module pré-analytique 1 rend compte à l'étape 55 de son nouvel état à l'émetteur de la demande.

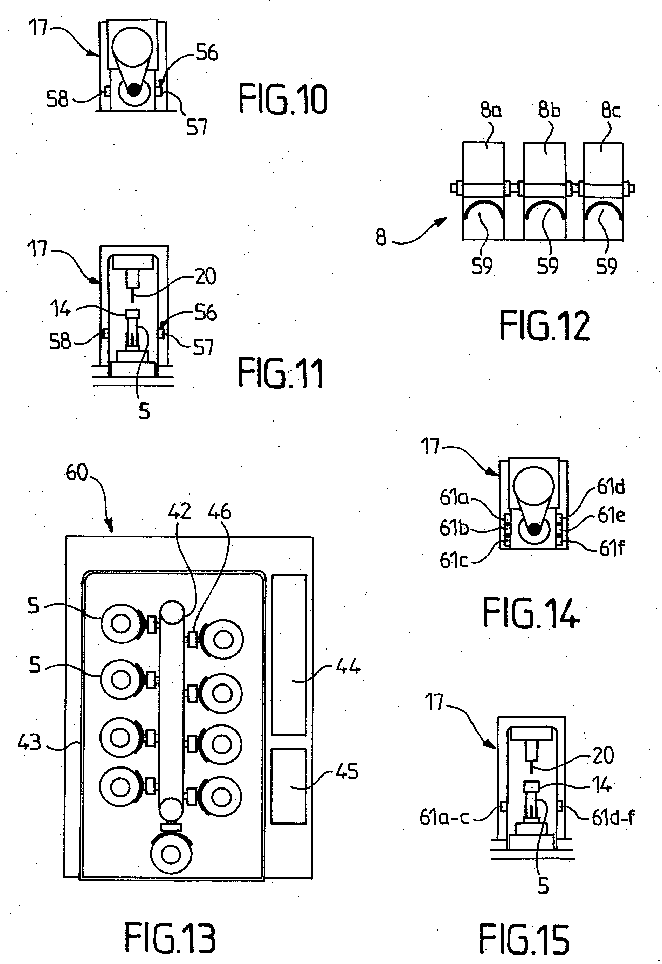

Dans la forme de réalisation des Figures 10 et 11, le module pré-analytique comprend, en plus de l'agitateur de tube, un détecteur 56 agencé pour détecter le niveau d'un liquide contenu dans un tube 5. Dans l'exemple ce détecteur 56 est combiné à un moyen de prélèvement 17 analogue à celui décrit plus haut. Le détecteur 56 comprend un émetteur 57 agencé pour émettre une onde lumineuse et un récepteur 58 agencé pour recevoir l'onde lumineuse ayant traversé le tube, ce qui permet de déterminer le niveau de liquide contenu dans le tube.

La Figure 12 montre un agitateur de tube 8 comportant trois roues 8a, 8b et 8c dont chacune porte un organe de chauffage 59 pour chauffer les tubes 5 sur l'agitateur de tube. Dans l'exemple les organes de chauffage 59 sont réalisés chacun sous la fomre d'une plaque fonctionnant par effet Peltier.

La Figure 13 montre un compartiment de conservation 60 analogue à celui décrit précédemment en référence à la Figure 6, mais l'enceinte isolante 43 du compartiment est prévue ici pour accueillir des tubes 5 destinés à l'analyse. De manière générale, le module pré-analytique 1 peut comprendre plusieurs compartiment de conservation 7 ou 60 destinés à des tubes de contrôle qualité ou à des tubes destinés à des analyses.

Dans la forme de réalisation des Figures 14 et 15, le module pré-analytique comprend des détecteurs 61a, 61b, 61c, 61d, 61e et 61f agencés pour détecter la présence de caillots dans des tubes de sang 5. Ces six détecteurs peuvent comprendre des moyens optiques ou des ondes sonores ou des moyens électriques.

## Revendications

1. Dispositif pour l'approvisionnement en tubes de sang (5) d'analyseurs sur sang total (3), qui comprend d'une part, un module pré-analytique (1) comportant au moins un agitateur de tube (8) pour homogénéiser le sang avant analyse, ledit module pré-analytique (1) étant disposé sur une chaîne de transfert (4) entre, une zone de stockage de tubes à analyser (2), et au moins un analyseur sur sang total (3) fonctionnant en mode unitaire et d'autre part, des moyens de chargement et de déchargement automatique des tubes (27, 28, 29) disposés entre l'agitateur de tube (8) et la chaîne de transfert (4), **caractérisé en ce que** la chaîne de transfert est une chaîne de transfert mono tube et **en ce que** le module pré-analytique (1) comprend en plus de l'agitateur de tube (8) un dispositif d'aération et de reconnaissance des tubes (6) alimenté en tubes (5) par des moyens de chargement et de déchargement automatique des tubes (26;27,28,29) disposés respectivement entre la chaîne de transfert (4) et le dispositif d'aération et de reconnaissance des tubes (6) et le module d'agitation des tubes (8), le dispositif d'aération et de reconnaissance des tubes (6) comprenant un dispositif de perçage des tubes (40) permettant d'effectuer leur aération et un dispositif de lecture permettant de reconnaître les informations de marquage des tubes.

2. Dispositif selon la revendication 1, **caractérisé en ce que** le module pré-analytique (1) comprend également un compartiment (7) de conservation et de mise à disposition de tubes de contrôle de qualité à usage de tests des analyseurs sur sang total (3) ainsi que des moyens de chargement et de déchargement automatique des tubes (25) disposés respectivement entre la chaîne de transfert (4) d'une part, le compartiment (7) de conservation et de mise à disposition de tubes de contrôle de qualité et d'autre part, l'agitateur de tube (8).

3. Dispositif selon la revendication 2, **caractérisé en ce que** le compartiment destiné à la mise à disposition de l'analyseur des tubes de contrôle qualité (7) comporte une enceinte isolante (43) dont l'intérieur est maintenu à température constante par un module de régulation (44) et un dispositif de commutation (45) permettant de transférer les paramètres de régulation vers le module d'interface réseau (10).

4. Dispositif selon la revendication 3, **caractérisé en ce que** les tubes de contrôle qualité sont fixés à l'intérieur de l'enceinte isolante (43) sur une courroie (42) par des moyens de fixation (46) de type mécanique ou magnétique commandés par un dispositif de contrôle et d'asservissement (9).

5. Dispositif selon l'une des revendications 3 et 4, **caractérisé en ce que** le module de régulation (44) est un module de régulation à effet Peltier.

6. Dispositif selon l'une des revendications 1 à 5, **caractérisé en ce que** l'agitateur (8) comporte une roue munie d'un nombre déterminé d'empreintes pouvant recevoir chacune un tube (5), chaque tube à agiter étant chargé dans une empreinte par l'intermédiaire d'un dispositif de chargement et de déchargement.

7. Dispositif selon l'une des revendications 1 à 6, **caractérisé en ce que** le module pré-analytique (1) comprend un module d'interface réseau (10) permettant au module de commande et d'asservissement (9) de recevoir des instructions d'un centre de télémaintenance ou d'un réseau informatique de type Internet ou Intranet.

8. Dispositif selon l'une des revendications 1 à 7, **caractérisé en ce que** la zone de stockage (2) comprend un bras manipulateur (13) pour associer sur un convoyeur (12) chaque tube (5) à un support (11) et **en ce que** le convoyeur (12) achemine les tubes avec leur support sur la chaîne de convoyage (4).

9. Dispositif selon l'une des revendications 1 à 8, **caractérisé en ce que** l'analyseur (3) comporte un dispositif d'analyse de sang (16) couplé à un moyen de prélèvement (17) comportant une empreinte (19) pour maintenir chaque tube (5) à analyser à l'aplomb d'une aiguille de prélèvement (20).

10. Dispositif selon l'une des revendications 1 à 9, **caractérisé en ce que** le module pré-analytique (1) comprend, en plus de l'agitateur de tube (8), un détecteur (56) pour détecter le niveau d'un liquide contenu dans un tube (5).

11. Dispositif selon l'une des revendications 1 à 10, **caractérisé en ce que** le module pré-analytique (1) comprend, en plus de l'agitateur de tube (8), un organe de chauffage (59) pour chauffer les tubes (8) sur l'agitateur de tube (8) par effet Peltier.

12. Dispositif selon l'une des revendications 2 à 11, **caractérisé en ce que** le module pré-analytique (1) comprend plusieurs compartiment de conservation (7, 60) destinés à des tubes de contrôle qualité ou à des tubes destinés à des analyses.

13. Dispositif selon l'une des revendications 1 à 12, **caractérisé en ce que** le module pré-analytique (1) comprend un détecteur (61a à 61f) pour détecter la présence de caillots dans des tubes de sang (5).

14. Dispositif selon la revendication 13, **caractérisé en ce que** le détecteur (61a à 61f) comprend des moyens optiques ou des ondes sonores ou des moyens électriques.

## Patentansprüche

1. Vorrichtung für die Versorgung von Vollblutanalysegeräten (3) mit Blutsammelröhrchen (5), welche einerseits ein präanalytisches Modul (1) umfasst, umfassend mindestens einen Röhrchenmischer (8) zur Homogenisierung des Bluts vor der Analyse, wobei das präanalytische Modul (1) auf einem Förderband (4) zwischen einem Lagerbereich der zu analysierenden Röhrchen (2) und mindestens einem Vollblutanalysegerät (3) angeordnet ist, welches im Einzelbetrieb arbeitet, und andererseits Mittel zum automatischen Befüllen und Leeren der Röhrchen umfasst (27, 28, 29), welche zwischen dem Röhrchenmischer (8) und dem Förderband (4) angeordnet sind, **dadurch gekennzeichnet, dass** das Förderband ein Band zur Beförderung von Einzelröhrchen ist, und dadurch, dass das präanalytische Modul (1) neben dem Röhrchenmischer (8) eine Vorrichtung zur Belüftung und Erkennung der Röhrchen (6) umfasst, welche mit Röhrchen (5) durch die Mittel zum automatischen Befüllen und Leeren der Röhrchen (26; 27, 28, 29) gespeist wird, welche jeweils zwischen dem Förderband (4) und der Vorrichtung zur Belüftung und Erkennung der Röhrchen (6) und dem Röhrenmischmodul (8) angeordnet sind, wobei die Vorrichtung zur Belüftung und Erkennung der Röhrchen (6) eine Vorrichtung zum Durchstechen der Röhrchen (40) umfasst, welche deren Belüftung ermöglicht, sowie eine Lesevorrichtung, welche die Erkennung der Kennzeichnungsinformationen der Röhrchen ermöglicht.

2. Vorrichtung nach Anspruch nach 1, **dadurch gekennzeichnet, dass** das präanalytische Modul (1) zudem ein Fach (7) zur Aufbewahrung und Bereitstellung von Röhrchen zur Qualitätskontrolle bei der Anwendung von Tests durch Vollblutanalysegeräte (3) sowie Mittel zum automatischen Befüllen und Leeren der Röhrchen (25), welche jeweils zwischen dem Förderband (4) einerseits, dem Fach (7) zur Aufbewahrung und Bereitstellung von Röhrchen zur Qualitätskontrolle und dem Röhrchenmischer (8) andererseits angeordnet sind, umfasst.

3. Vorrichtung nach Anspruch 2, **dadurch gekennzeichnet, dass** das für die Bereitstellung von Röhrchen zur Qualitätskontrolle gegenüber dem Analysegerät bestimmte Fach (7) eine isolierende Einschließung (43) umfasst, deren Inneres durch ein Regelmodul (44) und eine Umschaltvorrichtung (45), welche die Übertragung der Steuerparameter an das Netzwerkschnittstellenmodul (10) ermöglicht, bei konstanter Temperatur gehalten wird.

4. Vorrichtung gemäß Anspruch 3, **dadurch gekennzeichnet, dass** die Röhrchen zur Qualitätskontrolle im Inneren der isolierenden Einschließung (43) auf einem Riemen (42) durch mechanische oder magnetische Befestigungsmittel (46), welche über eine Steuer- und Sensorikvorrichtung (9) gesteuert werden, befestigt sind.

5. Vorrichtung nach einem der Ansprüche 3 und 4, **dadurch gekennzeichnet, dass** das Regelmodul (44) ein Modul zur Regelung gemäß Peltier-Effekt ist.

6. Vorrichtung nach einem der Ansprüche 1 bis 5, **dadurch gekennzeichnet, dass** der Mischer (8) ein Rad umfasst, welches mit einer bestimmten Anzahl von Ausformungen ausgestattet ist, von welchen jede ein Röhrchen (5) aufnehmen kann, wobei jedes zu mischende Röhrchen in einer Ausformung durch eine Vorrichtung zum Befüllen und Leeren befüllt wird.

7. Vorrichtung nach einem der Ansprüche 1 bis 6, **dadurch gekennzeichnet, dass** das präanalytische Modul (1) ein Netzwerkschnittstellenmodul (10) umfasst, das es dem Steuer- und Sensorikmodul (9) ermöglicht, die Instruktionen einer Fernwartungszentrale oder eines Internet- oder Intranet-Computernetzwerks zu empfangen.

8. Vorrichtung nach einem der Ansprüche 1 bis 7, **dadurch gekennzeichnet, dass** der Bereich zur Lagerung (2) einen Manipulatorarm (13) umfasst, um in einem Fördersystem (12) jedes Röhrchen (5) mit einem Träger (11) zu verbinden, und dadurch, dass das Fördersystem (12) die Röhrchen mit ihrem Träger auf dem Förderband (4) befördert.

9. Vorrichtung nach einem der Ansprüche 1 bis 8, **dadurch gekennzeichnet, dass** das Analysegerät (3) eine Blutanalysevorrichtung (16) umfasst, welche mit einem Probenahmemittel (17) verbunden ist, welches eine Ausformung (19) umfasst, um jedes zu analysierende Röhrchen (5) lotrecht zur Probenahmenadel (20) zu halten.

10. Vorrichtung nach einem der Ansprüche 1 bis 9, **dadurch gekennzeichnet, dass** das präanalytische Modul (1) neben dem Röhrchenmischer (8) einen Sensor (56) zur Ermittlung des im Röhrchen enthaltenen Flüssigkeitsstands (5) umfasst.

11. Vorrichtung nach einem der Ansprüche 1 bis 10, **dadurch gekennzeichnet, dass** das präanalytische Modul (1) neben dem Röhrchenmischer (8) eine Heizeinheit (59) zum Erhitzen der Röhrchen (8) im Röhrchenmischer (8) mittels Peltier-Effekt umfasst.

12. Vorrichtung nach einem der Ansprüche 2 bis 11, **dadurch gekennzeichnet, dass** das präanalytische Modul (1) mehrere Fächer zur Aufbewahrung (7, 60) umfasst, welche für Röhrchen zur Qualitätskontrolle oder für Röhrchen, die für Analysen bestimmt sind, vorgesehen sind.

13. Vorrichtung nach einem der Ansprüche 1 bis 12, **dadurch gekennzeichnet, dass** das präanalytische Modul (1) einen Sensor (61a bis 61f) zur Ermittlung vorkommender Gerinnsel in den Blutsammelröhrchen (5) umfasst.

14. Vorrichtung nach Anspruch 13, **dadurch gekennzeichnet, dass** der Sensor (61a bis 61f) optische Mittel oder Schallwellen oder elektrische Mittel umfasst.

## Claims

1. Device for supplying tubes of blood (5) to whole blood analyzers (3), which comprises on the one hand a pre-analytical module (1) comprising at least one tube agitator (8) for homogenizing the blood before analysis, said pre-analytical module (1) being disposed on a transfer fine (4) between a storage zone for tubes to be analysed (2) and at least one whole blood analyser (3) operating in unitary mode and on the other hand means for automatically loading and unloading the tubes (27, 28, 29) disposed between the tube agitator (8) and the mono-tube transfer line (4), **characterised in that** the transfer fine is a mono tube transfer fine and **in that** the pre-analytical module (1) comprises in addition to the tube agitator (8) a device for aerating and recognising the tubes (6) which is supplied with tubes (5) by automatic loading and unloading means for the tubes (26, 27, 28, 29) disposed respectively between the transfer fine (4) and the device for aerating and recognizing the tubes (6) and the tube agitation module (8), the device for aerating and recognizing the tubes (6) comprising a device for piercing the tubes (40) which enables them to be aerated and a reading device for recognizing the label information on the tubes.

2. Device according to claim 1, **characterised in that** the pre-analytical module (1) also comprises a compartment (7) for storing and providing quality control tubes for use in tests on whole blood analyzers (3) as well as automatic loading and unloading means for the tubes (25) which are disposed respectively between the transfer line (4) on the one hand, the compartment (7) for storing and providing the quality control tubes and on the other hand the tube agitator (8).

3. Device according to claim 2, **characterised in that** the compartment intended for providing the analyser with quality control tubes (7) comprises an insulating enclosure (43) the interior of which is kept at a constant temperature by a regulating module (44) and a switching device (45) for transferring the regulating parameters to the network interface module (10).

4. Device according to claim 3, **characterised in that** the quality control tubes are fixed inside the insulating enclosure (43) on a belt (42) by mechanical or magnetic fixing means (46) controlled by a control and feedback device (9).

5. Device according to one of claims 3 and 4, **characterised in that** the regulating module (44) is a Peltier effect regulating module.

6. Device according to one of claims 1 to 5, **characterised in that** the agitator (8) comprises a wheel provided with a specified number of indentations each capable of receiving a tube (5), each tube which is to be agitated being loaded into an indentation by means of a loading and unloading device.

7. Device according to one of claims 1 to 6, **characterised in that** the pre analytical module (1) comprises a network interface module (10) enabling the control and feedback module (9) to receive instructions from a remote maintenance center or from an internet or intranet type information network.

8. Device according to one of claims 1 to 7, **characterised in that** the storage zone (2) comprises a manipulating arm (13) for associating on a conveyor (12) each tube (5) with a support (11) and **in that** the conveyor (12) transports the tubes with their supports on the conveying line (4).

9. Device according to one of claims 1 to 8, **characterised in that** the analyser (3) comprises a blood analyzing device (16) coupled with sampling means (17) comprising an indentation (19) for holding each tube (5) which is to be analysed vertically in alignment with a sampling needle (20).

10. Device according to one of claims 1 to 9, **characterised in that** the pre-analytical module (1) comprises, in addition to the tube agitator (8), a detector (56) for detecting the level of a liquid contained in a tube (5).

11. Device according to one of claims 1 to 10, **characterised in that** the pre-analytical module (1) comprises in addition to the tube agitator (8) a heater (59) for heating the tubes (8) on the Peltier effect tube agitator (8).

12. Device according to one of claims 2 to 11, **characterised in that** the pre analytical module (1) comprises a number of storage compartments (7, 60) intended for quality control tubes or tubes intended for analysis.

13. Device according to one of claims 1 to 12, **characterised in that** the pre-analytical module (1) comprises a detector (61a-61f) for detecting the presence of dots in tubes of blood (5).

14. Device according to claim 13, **characterised in that** the detector (61a-61f) comprises optical means or sound waves or electrical means.
